# FASCICULE DE BREVET EUROPEEN

(11) **EP 2 282 850 B1**
(45) Date de publication et mention de la délivrance du brevet: **16.10.2013**
(21) Numéro de dépôt: 09765992.4
(22) Date de dépôt: 19.05.2009
(51) Int. Cl.: B08B 9/043, B08B 9/08, B09B 5/00, E04G 23/08

(54) **INSTALLATION ROBOTISEE PERMETTANT LA DEMOLITION, LA DEPOLLUTION ET LA DECONTAMINATION D'OUVRAGES DE CONSTRUCTION DE GRANDE HAUTEUR**
ROBOTERANLAGE ZUR ZERLEGUNG, ENTGIFTUNG UND DEKONTAMINIERUNG VON BAUWERKEN GROSSER HÖHE
ROBOT INSTALLATION ENABLING THE DEMOLITION, DEPOLLUTION AND DECONTAMINATION OF TALL WORKS OF CONSTRUCTION

(30) Priorité: 23.05.2008 FR 0853358
(43) Date de publication de la demande: 16.02.2011
(73) Titulaire: AD, 42350 La Talaudière (FR)
(72) Inventeur: ARNAUD, Jean-Philippe, 42170 Saint Just Saint Rambert (FR)
(74) Mandataire: Dupuis, François
(86) Numéro de dépôt international: PCT/FR2009/000583
(87) Numéro de publication internationale: WO 2009/153430

(56) Documents cités:
- EP-A- 1 724 031
- WO-A-93/07082
- WO-A-2004/058572
- DE-U1- 9 214 400
- DE-U1-202007 007 528
- JP-A- 3 098 686
- US-A- 5 179 757

## Description

L'invention se rattache au secteur technique des équipements et matériels nécessaires pour effectuer sur tous types ouvrages; des travaux de dépollution, décontamination et démolition. Ces ouvrages sont du type cheminées d'usines, de puits verticaux ou de conduits horizontaux (puits tunnel, conduits eau forcées pipes de gros diamètre, etc, et ouvrages similaires, de grande hauteur, ou profondeur etc. Ces ouvrages ont été construits il y a plusieurs décades à l'époque où les considérations environnementales n'existaient pas. Il en était également vrai pour les considérations de santé publique et des individus en particulier qui travaillaient avec la manipulation ou le contact avec des matériaux (du type amiante) ou autres polluants ou contaminants susceptibles de générer des maladies extrêmement dangereuses que l'on appelle maintenant couramment « le cancer de l'amiante » ou autre pour ceux qui ont travaillé dans cet environnement où qui pourraient y travailler.

Pour le cas de l'amiante qui était un matériau couramment utilisé dans le domaine de la construction de tous types, il a été reconnu et considéré par la jurisprudence les méfaits de ce matériau au contact des personnes pendant des temps d'exposition longs et renouvelés sur de longues périodes. Des décrets officiels ont donc interdit son utilisation.

Cependant, le problème reste posé lorsqu'il y a lieu de démolir de restructurer ou rénover ou entretenir ces constructions, en enlevant l'amiante ou autre polluants ou contaminants et en l'évacuant. En égard des propriétés de l'amiante, anti-feu par exemple, son utilisation antérieure dans certains types de construction, du type cheminées d'usines, était courante. Or, l'évolution technologique, la délocalisation de certaines productions industrielles et métallurgiques en particulier, font qu'il y a une cessation d'activités de certaines zones de production inutiles que l'on essaie de remplacer pour autant que possible par d'autres activités notamment de services. Il faut donc démolir ou rénover ou entretenir ces constructions tout en prenant le maximum de précautions sanitaires pour protéger les individus et opérateurs ainsi que l'environnement et tenir compte des contraintes juridiques maintenant en vigueur.

Le problème posé de démolition, de rénovation ou de restructuration de constructions, incorporant de l'amiante ou autres polluants ou contaminants, trouve une application particulière pour les cheminées d'usines, où autres. Ces cheminées sont très souvent de grande hauteur, de plusieurs dizaines de mètres, ont une largeur également conséquente en fonction de la construction initiale. Cette largeur peut facilement être de l'ordre de 3 à 15 mètres de diamètre et plus, ce qui donne des constructions très imposantes. En pratique, ces cheminées construites à base d'éléments en brique, béton ou autres matériaux sont agencées intérieurement pour la réception de matière isolante et en particulier d'amiante. Le maintien des parois en amiante ou autres à l'intérieur de la cheminée en brique où des ouvrages s'effectuait par l'utilisation de moyens de liaison appropriés.

La démolition de ce type de constructions pose maintenant de très gros problèmes de sécurité physique et sanitaire, en particulier dans le cadre du traitement de cheminées de grande hauteur ou profondeur et difficiles d'accès. Ainsi, l'un des objectifs de l'invention est de limiter les interventions humaines en participant à une meilleure préservation de l'environnement.

L'intervention de personnes physiques, même hyper spécialisées pour ce type d'opérations, même protégées par des équipements professionnels individuels spécifiques à ce type de travaux et toutes protections vestimentaires, apparaît être moins adaptée par rapport aux contraintes environnementale et législatives. Le travail à des hauteurs de 20, 50, 100 mètres au-dessus du sol ou en dessous du sol, avec des équipements de protection et de sécurité est très difficile et délicat, car on doit aussi compter sur la qualité détériorée avec le temps et avec l'usage de ces constructions. L'amiante ou autres matériaux polluants ou contaminants se trouvant à l'intérieur de l'ouvrage à traiter, il faut avoir un accès à l'intérieur de celle-ci pour rendre plus efficaces les travaux d'enlèvement de la matière ou de démolition.

En outre, le personnel pour exécuter ces travaux est de plus en plus rare à trouver.

Le dynamitage de ces constructions, selon une technologie parfaitement maîtrisée par le Demandeur, n'est pas possible car cela entraînerait une dilution de l'amiante ou autres matériaux polluants et contaminants dans l'environnement proche de la construction détruite, sans compter l'effet induit pas les vents et courants d'air porteurs de particules.

Le problème posé présente une grande acuité et le nombre de constructions à désamianter ou dépolluer et à démolir ou restructurer est très important. Les constructions concernées sont de tous types, cheminées, tunnels, puits, conduits, canalisations.

Initialement, la dépollution et démolition de ce type d'ouvrage s'effectuait de manière manuelle et par du personnel en zone contaminé ou polluée engendrant un risque accru pour ces derniers, et ce dans des conditions de travail difficiles, et malgré la mise en oeuvre de moyens de protections individuels ou collectifs

La démarche du Demandeur, qui est spécialisé dans cette activité particulière de destruction, de constructions par démolition, dynamitage, dépollution, a été d'imaginer une nouvelle manière de traiter ce type de constructions en vue d'effectuer les opérations de désamiantage, ou de dépollution ou simplement de nettoyage, dans les meilleures conditions de sécurité physique et de santé pour les opérateurs et de protection de l'environnement.

On connaît par les brevets EP 1724031, WO 2004/058572, JP 03098686, WO 93/07082, US 5179757, DE 9214400, DE 202007007528, différents dispositifs et installations permettant l'accès intérieur à des surfaces à nettoyer ou à détruire. Le document WO 2004/058572 montre une installation selon le préambule de la revendication 1. En égard de la spécificité de l'invention, il y a une charge de 3 à 5 tonnes. Les solutions proposées par les différents brevets précités ne sont pas applicables, les cheminées devant être décontaminées et non détruites.

La réflexion et la démarche de Demandeur ont été d'imaginer et de créer une installation qui permette d'enlever les couches d'amiante ou de toutes autres matières polluantes ou non ou contaminantes, de réaliser une préparation des surfaces en vue de rénovation, ou simplement de nettoyer les surfaces en toute sécurité pour l'environnement et les individus.

La solution technologique imaginée par le Demandeur répond parfaitement à ces objectifs et permet d'effectuer ces travaux d'exception dans les meilleures conditions.

Ainsi selon l'invention, l'installation permettant la démolition, la rénovation ou l'entretien de constructions intégrant de l'amiante ou autres polluants ou contaminants dans les parois de l'ouvrage à traiter, est remarquable en ce qu'elle s'affranchit de toute intervention humaine, les opérateurs se contentant de limiter leur intervention pour voir l'opération de dépollution, rénovation ou restructuration à distance des composants de l'installation.

Ainsi, ces objectifs sont atteints par l'installation selon la revendication 1.

Pour fixer l'objet de l'invention illustrée d'une manière non limitative aux figures des dessins où :
la figure 1 est une vue d'ensemble d'une construction dans un exemple d'application du type cheminée d'usine destinée à être désamiantée et démolie et mettant en oeuvre l'invention.
- la figure 2 est une vue de dessus dans un exemple d'application d'une cheminée à désamianter avec l'installation selon l'invention.
- la figure 3 est une vue partielle et à grande échelle illustrant, dans un exemple d'application par exemple, la partie supérieure du col d'une cheminée à désamianter.
- la figure 4 est une vue du dessus, dans un exemple d'application, de l'ouverture de la cheminée illustrant de manière schématique le positionnement d'un robot dans la cheminée en vue de se positionner en appui et contre-appui dans la cheminée pour effectuer les opérations de désamiantage.
- les figures 5 et 6 sont des vues partielles et en coupe illustrant le positionnement de certains éléments de l'installation pour assurer sa tenue sur et à l'intérieur de la cheminée selon différents types d'intervention, projection d'un fluide de désagrégation de l'amiante, enlèvement de modules de briques.

Afin de rendre plus concret l'objet de l'invention, on le décrit maintenant d'une manière non limitative illustrée aux figures des dessins.

L'invention concerne une installation robotisée permettant la démolition, la dépollution et la décontamination d'ouvrages de construction, de grande largeur ou de grande profondeur ou de grande longueur, puits, tunnels, conduits, cheminées et similaires. Pour la compréhension de l'invention, on a illustré, à titre non limitatif, une application à des cheminées et le descriptif ci-après se rapporte à cette application.

L'invention vise une installation robotisée comprenant une structure portative qui est susceptible de s'adapter, en fonction des applications, sur les ouvrages à dépolluer, à décontaminer, à rénover et/ou à restructurer. On décrira ci-après, dans l'application du traitement d'une cheminée, la structure portative étant ainsi positionnée et maintenue par rapport à la cheminée et au sol. Pour d'autres applications, telles que des tunnels, canalisations, la structure portique de l'installation robotisée sera positionnée et maintenue autrement sans modifier le concept de l'invention.

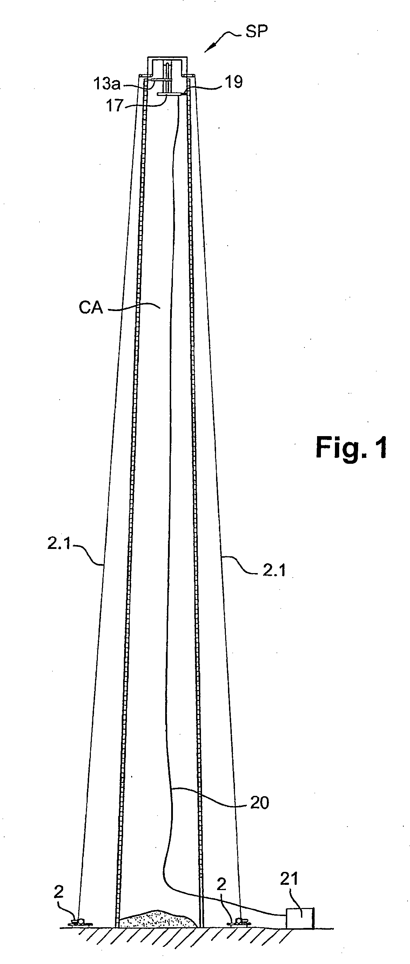

On a représenté, figure 1, une construction à désamianter par (CA) du type par exemple cheminée d'usine. Ces cheminées sont de grande hauteur, de plusieurs dizaines de mètres. Elles ont une structure de construction en briques (1a) avec intérieurement un revêtement du type mastic (1b), un vide d'air (1c) et une colonne (1d) de matériau du type amiante maintenue de toute manière connue appropriée. On a représenté à titre d'exemple une cheminée dans une configuration de cône s'élargissant au fur et à mesure de sa partie supérieure jusqu'à proximité de sa base au sol. Cependant, sans sortir du cadre de l'invention, l'édifice peut avoir une configuration cylindrique sur toute sa hauteur, ou autre selon les applications.

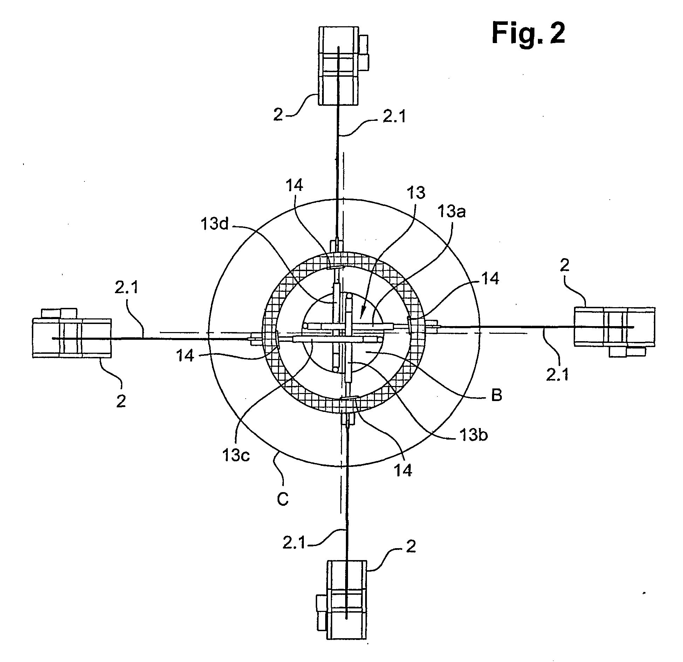

L'installation qui permet le désamiantage ou dépollution ou rénovation de l'édifice par le haut comprend une structure portique (SP) qui est disposée au dessus du col ou ouverture supérieure (1e) de l'édifice ou cheminée qui est maintenue en suspension verticale par une pluralité de treuils (2) disposés au sol comme représenté figure 2. La partie supérieure (1e) de la cheminée est agencée sur sa périphérie soit à l'origine, soit d'une manière rapportée avec une plate-forme (3) fixe susceptible de recevoir des moyens de renvoi (4-5) du type galets pour chacun des câbles (2.1) de traction associés aux treuils (2). On obtient ainsi un haubanage de la structure portique (SP) qui assure la stabilisation de cette dernière avec une répartition équilibrée des efforts et charges dues aux sollicitations engendrées par le fonctionnement de l'installation, mais aussi des contraintes environnementales dues au vent par exemple. Il y a lieu de considérer que la structure portique (SP) avec l'ensemble de l'équipement associé qui sera décrit par la suite, a un poids de plusieurs tonnes, de l'ordre de 3 à 5 tonnes, selon la mise en oeuvre et selon les caractéristiques dimensionnelles des édifices à désamianter. Les câbles (2.1) sont donc des câbles ayant la caractéristique de haute sécurité.

Par le biais des moyens de renvoi (4-5), chaque câble est fixé à son extrémité libre par crochet (24), mousquetons ou moyens équivalents à une prise (16) en forme d'anneau directement formé sur la base de la structure portique (SP).

Cette structure portique (SP) comprend un châssis réalisé en tôle mécano-soudée par exemple à partir de laquelle seront disposés trois types de composants (A-B-C), qui permettront pour le composant (A) la réception de moyens de guidage en élévation et abaissement vertical du composant (B) ayant pour fonction de définir des contre-appuis de stabilisation à l'intérieur de la cheminée, et d'un composant (C) ayant pour fonction d'autoriser la projection d'un fluide de désagrégation de l'amiante et autres revêtements à l'intérieur de la cheminée, et ce, dans un sens tournant sur 360° pour agir sur toute la surface intérieure de l'édifice et de la cheminée en l'espèce.

Il sera décrit dans la suite de la description chacun des composants dans leur structure et fonctionnalité, mais non les automatismes et groupes motorisés assurant leur fonctionnement.

En se référant à la figure 2, le composant (A) comprend à partir d'une base fixe (11) horizontale un bâti vertical central fixe (6) susceptible de recevoir dans sa partie supérieure un moyen (7) de guidage d'une colonne de liaison (8) verticale selon un réglage en hauteur approprié du composant (C), ladite colonne (8) étant solidarisée à une structure fixe (12) au composant (C).

Autour de ce bâti, à partir de la base (11), sont disposées des colonnes (9) verticales recevant des vérins (10) dont les tiges (10a) sont solidarisées à la structure fixe (12) du composant (C). On comprend ainsi qu'il y a une adaptabilité en position verticale du composant (C) à l'intérieur de la cheminée.

Par ailleurs, la base (11) du composant (A) est aménagée pour recevoir le châssis (13) support des moyens (14) d'appui et de stabilisation de la structure portique (SP) à l'intérieur de la cheminée.

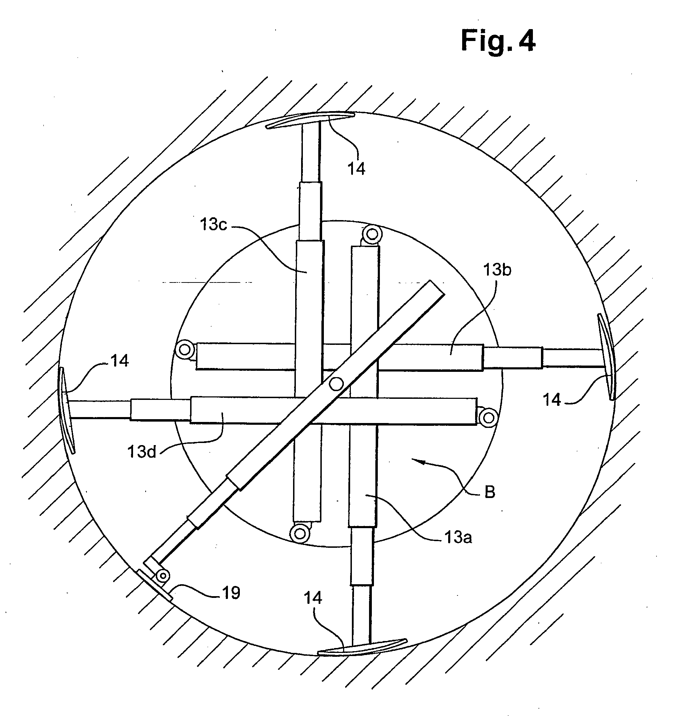

Ce châssis (13) présente une configuration de quatre bras (13a), (13b), (13c) et (13d) perpendiculaires entre eux, comme représenté figures 2 et 4, et selon un agencement de profils obtenus en tôle et mécano-soudure. Chaque bras a une configuration carrée ou rectangulaire en étant de grande longueur. Chaque bras est susceptible de recevoir des éléments télescopiques (15) avec à l'extrémité du dernier élément télescopique un moyen (14) d'appui et de stabilisation établi sous forme d'un patin d'appui profilé et orientable pour venir en appui contre la paroi en regard de la cheminée. Pour assurer un parfait équilibre, les bras opposés (13a-13c) et (13b-13d) reçoivent les moyens télescopiques (15) précités fonctionnant strictement en opposition et simultanément. Des moyens moteurs, et le cas échéant de liaison et d'accouplement des vérins opposés, peuvent être utilisés pour un fonctionnement en simultané. Le châssis (13) présente les quatre bras monobloc, et pour des questions de construction, les bras (13a-13c) et (13b-13d) sont superposés deux à deux avec un encombrement moindre.

Selon une disposition importante de l'invention, les patins disposés en bout de chaque ensemble télescopique sont orientables en position par des moyens appropriés pour épouser la forme intérieure en regard de l'édifice ou cheminée dans l'exemple considéré.

En outre, chaque patin peut être agencé lui-même avec une pluralité de petits modules orientables les uns les autres avec une indépendance de direction pour affiner la zone d'appui sur la face intérieure en regard de la cheminée.

Ainsi, en égard des sollicitations et forces engendrées par le fonctionnement de l'installation, la tenue de l'ensemble est confortée.

Selon une autre disposition importante de l'invention, il convient de décrire le composant (C) qui est agencé pour permettre la destruction des bandes ou couches d'amiante se trouvant dans la cheminée.

La structure fixe (12) du composant (C) reçoit à fixation à l'horizontale d'un corps profilé (17) de section carrée ou rectangulaire recevant intérieurement également des éléments télescopiques (18) qui sont susceptibles de se développer axialement, selon une distance permettant à son extrémité d'être en regard de la paroi intérieure de la cheminée. A l'extrémité de l'élément télescopique final (18a) est fixé de manière articulé un moyen (19) diffuseur d'un fluide par exemple sous pression en provenance par un flexible (20) d'une source de distribution (21) située au sol. Le raccordement du flexible sur le moyen (19) diffuseur s'effectue de toute manière appropriée et la puissance de projection du fluide par la source de distribution (21) est suffisante pour être projetée avec une pression de puissance suffisante pour désagréger l'amiante et autres revêtements en regard.

La source de distribution (21) se trouve à l'extérieur de la cheminée et le flexible (20) est de longueur suffisante pour tenir compte de la hauteur totale de la cheminée ou édifice. Le moyen (19) diffuseur du fluide est configuré de manière appropriée pour si nécessaire prendre appui contre la paroi d'amiante à désagréger. Le fluide pourra être de l'eau sous pression.

Selon l'invention, le profilé (17) support du moyen de projection du fluide est orientable selon 360° pour balayer la totalité de la surface intérieure de la cheminée dans un même plan horizontal.

Cette rotation sur 360° peut être effectuée à partir de la colonne de guidage disposée à partir du bâti fixe du composant (A), avec tous moyens de roulement nécessaires.

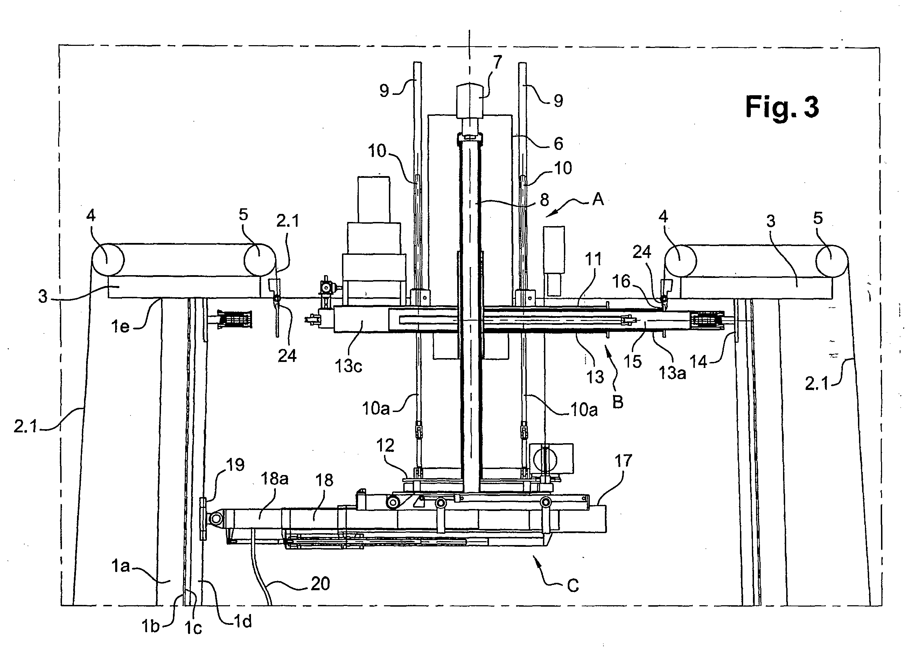

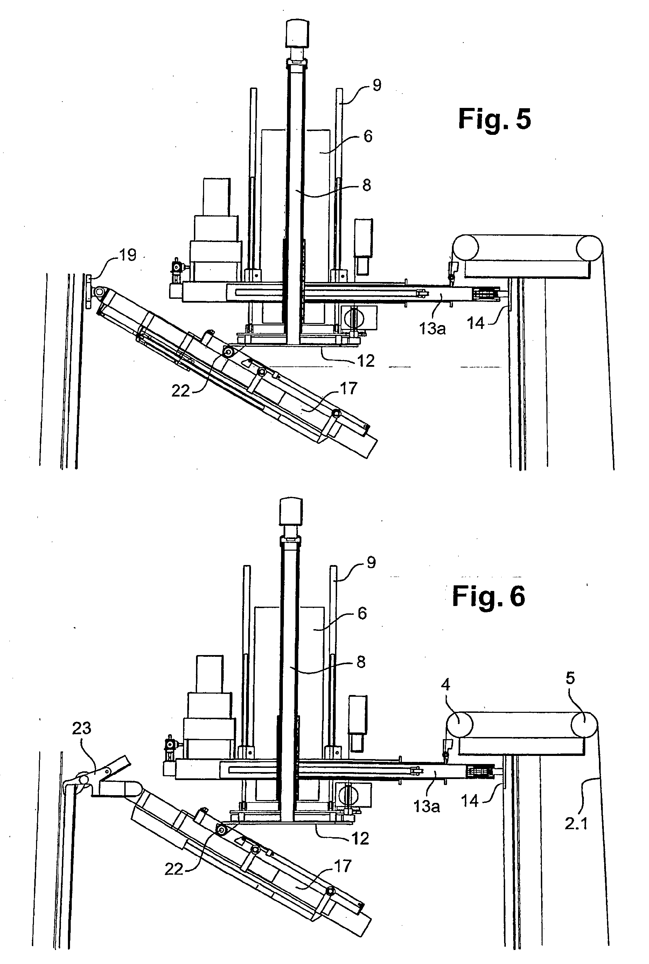

Selon une autre disposition de l'invention, le corps profilé (17) support du moyen de projection de fluide peut être articulé par rapport à la structure fixe (12) de liaison, à partir d'un axe de pivotement (22), afin de permettre un pivotement angulaire limité comme représenté aux figures 5 et 6. A cet effet, cela permet de relever en position le moyen (19) diffuseur pour atteindre la partie supérieure haute de la cheminée en vue d'évacuer aussi à cet endroit les parties d'amiante et autres détritus à évacuer. Des moyens de verrouillage non représentés assurant le contrôle en position et la tenue in situ en position horizontale figure 3, sont en positon inclinée figures 4 et 5.

Dans une variante de réalisation, l'extrémité de l'élément télescopique se trouvant dans le corps profilé (17) peut recevoir des moyens (23) réalisés sous forme d'un dispositif à pinces commandé par des moyens électroniques appropriés. Ce dispositif à pinces permet après enlèvement de l'amiante d'enlever chaque module de brique composant le positionnement de la cheminée.

On comprend par ailleurs que la matière désagrégée d'amiante et tous les détritus sont collectés par gravité au fond de la cheminée qui est ou qui sera aménagée préalablement à cet effet.

Toute l'installation décrite ci-avant est associée à des mécanismes moteurs mécaniques, électroniques, et de vision qui permettent à un opérateur situé en bas de l'édifice de contrôler toutes les opérations. Des caméras et autres moyens de contrôle équipent l'installation à des fins de contrôle et de sécurité.

L'installation décrite est chargée en haut de la cheminée par grue ou hélicoptère en fonction de la charge.

Les avantages ressortent bien de l'invention en répondant à l'ensemble des objectifs visés.

L'installation robotisée s'applique au traitement de tous types d'ouvrages de construction. Selon la nature de l'ouvrage à travailler, cheminées, puits, à axe vertical, ou tunnels, canalisations, à axe horizontal, les différents moyens de l'installation seront positionnés à la verticale ou à l'horizontal.

## Revendications

1. Installation permettant la démolition, la dépollution et la décontamination d'ouvrages de constructions de grande hauteur du type incluant à partir d'une structure portique (SP) disposées au dessus de l'ouverture supérieure de l'édifice des moyens réglables en position pour prendre appui contre la paroi intérieure de la construction et des moyens articulés et orientables pour assurer une projection de fluides de nettoyage, dans laquelle la structure portique (SP) est maintenue en suspension verticale par un treuil (2), dans laquelle la partie supérieure de l'édifice est agencée sur sa périphérie avec une plateforme (3) fixe, dans laquelle la structure portique (SP) comprend un châssis (13) à partir duquel sont disposés trois types de composants (A)(B)(C) qui permettent par le composant (A) la réception de moyens de guidage en élévation et abaissement vertical d'un composant (B) agencé pour assurer la fonction de contre-appui, de stabilisation à l'intérieur de l'édifice, et d'un composant (C) autorisant la projection d'un fluide de désagrégation de l'amiante et autres revêtements à l'intérieur de l'édifice et orientable sur 360°, et dans laquelle le composant (A) est aménagé avec une base fixe à partir de laquelle sont disposés les moyens permettant le réglage en position du composant (C) et de ses moyens de projection de fluides, et dans laquelle la dite base est aménagée pour recevoir le châssis support (13), des moyens (14) d'appui et de stabilisation de la structure portique (SP), les bras supports recevant en extrémité des moyens d'appui constituant un patin, **caractérisé en ce qu'**elle comporte une pluralité de treuils (2) disposés au sol, et **en ce que** la plateforme (3) est susceptible de recevoir des moyens de renvoi (4-5) pour chacun des treuils en créant un haubanage de la structure portique, et **en ce que** le dit châssis (13) présente une configuration de quatre bras (13a)(13b)(13c)(13d) monobloc parallèles deux à deux et superposés deux à deux , les bras-supports (13a)(13c) et (13b)(13d) recevant des moyens télescopiques (15), les dits moyens télescopiques disposés deux à deux, en opposition, étant configurés pour être commandés simultanément pour assurer le contre-appui en équilibre, et **en ce que** le composant (C) comprend une structure fixe (12) recevant un corps profilé (17) articulé et orientable et recevant des éléments télescopiques (18) avec en extrémité un moyen (19) diffuseur d'un fluide ou des moyens (23) réalisés sous forme d'un dispositif à pinces.

2. Installation, selon la revendication 1, **caractérisée en ce que** le composant (A) comprend, à partir d'une base fixe (11) horizontale, un bâti vertical central fixe (6) susceptible de recevoir dans sa partie supérieure un moyen (7) de guidage d'une colonne de liaison (8) verticale selon un réglage en hauteur du composant (C), ladite colonne (8) étant solidarisée à une structure fixe (12) au composant (C),
et **en ce que**, autour de ce bâti, à partir de la base (11), sont disposées des colonnes (9) verticales recevant des vérins (10) dont les tiges (10a) sont solidarisées à la structure fixe (12) du composant (C).

3. Installation, selon la revendication 1, **caractérisée en ce que** les moyens (14) d'appui et de stabilisation sous forme de patins disposés en bout de chaque ensemble télescopique sont orientables en position par des moyens pour épouser la forme intérieure en regard de l'édifice.

4. Installation, selon la revendication 3, **caractérisée en ce que** chaque patin est agencé lui-même avec une pluralité de petits modules orientables les uns les autres avec une indépendance de direction.

5. Installation, selon la revendication 2, **caractérisée en ce que** la structure fixe (12) du composant (C) reçoit à fixation à l'horizontale d'un corps profilé (17) recevant intérieurement des éléments télescopiques (18) qui sont susceptibles de se développer axialement, selon une distance permettant à son extrémité d'être en regard de la paroi intérieure de la cheminée,
et **en ce que**, à l'extrémité de l'élément télescopique final (18a), sont fixés, de manière articulée, un moyen (19) diffuseur d'un fluide ou des moyens (23) réalisés sous forme d'un dispositif à pinces.

6. Installation, selon la revendication 5, **caractérisée en ce que** le profilé (17) support du moyen de projection de fluide est articulé par rapport à la structure fixe (12) de liaison, à partir d'un axe de pivotement (22), afin de permettre un pivotement angulaire limité, pour permettre le relevage en position du moyen presseur (19) afin d'atteindre la partie supérieure haute de l'édifice, des moyens de verrouillage assurant la liaison entre le profilé support (17) et la structure fixe (12).

7. Installation, selon l'une quelconque des revendications 1 à 6, dans son application à un ouvrage vertical du type cheminée ou puits, **caractérisée en ce que** la structure portique (SP) est disposée au dessus du col constituant l'ouverture supérieure (1c) de l'ouvrage maintenu en suspension verticale par une pluralité de treuils (2) disposés au sol,
et **en ce que** la partie supérieure (1e) de l'édifice est agencée sur sa périphérie avec une plateforme (3) fixe susceptible de recevoir des moyens de renvoi (4-5) pour chacun des câbles (2.1) de traction associés aux treuils (2) en créant un haubanage de la structure portique (SP).

8. Installation, selon la revendication 7, **caractérisée en ce que** les moyens de renvoi (4-5) sont des galets,
et **en ce que** chaque câble est fixé à son extrémité libre par crochet (24), mousquetons ou moyens équivalents à une prise (16) en forme d'anneau directement formé sur la base de la structure portique (SP).

## Patentansprüche

1. Anlage, die den Abbruch, die Sanierung und die Dekontaminierung von Bauwerken großer Höhe ermöglicht, der Art, die ausgehend von einer Rahmenkonstruktion (SP) über der oberen Öffnung des Gebäudes angeordnete Einrichtengen, die lageeinstellbar sind, um sich an der Innenwand des Baus abzustützen, und angelenkte und ausrichtbare Einrichtungen umfasst, um einen Ausstoß von Reinigungsflüssigkeiten sicherzustellen, wobei die Rahmenkonstruktion (SP) durch eine Winde (2) in vertikaler Aufhängung gehalten ist, wobei der obere Teil des Gebäudes auf seinem Umfang mit einer feststehenden Plattform (3) versehen ist, wobei die Rahmenkonstruktion (SP) ein Gestell (13) umfasst, von dem ausgehend drei Arten von Elementen (A), (B), (C) angeordnet sind, die durch das Element (A) die Aufnahme von Führungseinrichtungen zur vertikalen Anhebung und Absenkung eines zur Sicherstellung der Gegenabstützungsfunktion eingerichteten Elements (B) zur Stabilisierung im Inneren des Gebäudes ermöglichen, und eines Elements (C), das den Ausstoß einer Zersetzungsflüssigkeit für Asbest und andere Beschichtungen im Inneren des Gebäudes zulässt und über 360° ausrichtbar ist, und wobei das Element (A) mit einer feststehenden Basis eingerichtet ist, von der ausgehend Einrichtungen angeordnet sind, welche die Lageeinstellung des Elements (C) und seiner Flüssigkeitsausstoßeinrichtungen zulassen, und wobei die Basis dazu eingerichtet ist, das Trägergestell (13) und Stütz- und Stabilisierungseinrichtungen (14) für die Rahmenkonstruktion (SP) aufzunehmen, wobei die Stützarme an einem Ende Stützeinrichtungen aufnehmen, die einen Gleitschuh darstellen, **dadurch gekennzeichnet, dass** sie mehrere am Boden angeordnete Winden (2) umfasst, und dass die Plattform (3) Rückstelleinrichtungen (4-5) für jede der Winden aufnehmen kann, wobei eine Verspannung der Rahmenkonstruktion geschaffen wird, und dass das Gestell (13) einen Aufbau aus vier aus einem Stück bestehenden, parallelen, paarweisen und paarweise übereinander angeordneten Armen (13a), (13b), (13c), (13d) aufweist, wobei die Stützarme (13a), (13c) und (13b), (13d) Teleskopeinrichtungen (15) aufnehmen, wobei die paarweise entgegengesetzt angeordneten Teleskopeinrichtungen dazu ausgelegt sind, gleichzeitig gesteuert zu werden, um die Gegenabstützung im Gleichgewicht sicherzustellen, und dass das Element (C) eine feststehende Struktur (12) umfasst, die einen Profilkörper (17) aufnimmt, der angelenkt und ausrichtbar ist, und die Teleskopelemente (18) aufnimmt, die an einem Ende eine Diffusoreinrichtung (19) für ein Fluid oder Einrichtungen (23) haben, die in Form einer Vorrichtung mit Greifern ausgeführt sind.

2. Anlage nach Anspruch 1, **dadurch gekennzeichnet, dass** das Element (A) ausgehend von einer horizontalen, feststehenden Basis (11) ein feststehendes, zentrales, vertikales Gehäuse (6) umfasst, das in seinem oberen Teil eine Einrichtung (7) zum Führen einer vertikalen Verbindungssäule (8) entsprechend einer Höheneinstellung des Elements (C) aufnehmen kann, wobei die Säule (8) an einer feststehenden Struktur (12) des Elements (C) befestigt ist,
und dass, um das Gehäuse herum, ausgehend von der Basis (11), vertikale Säulen (9) angeordnet sind, die Zylinder (10) aufnehmen, deren Schäfte (10a) an der feststehenden Struktur (12) des Elements (C) befestigt sind.

3. Anlage nach Anspruch 1, **dadurch gekennzeichnet, dass** die Stütz- und Stabilisierungseinrichtungen (14) in Form von Gleitschuhen, die am Ansatz jeder Teleskopeinheit angeordnet sind, durch Einrichtungen in der Lage ausrichtbar sind, um sich an die dem Gebäude zugewandte Innenform anzuschmiegen.

4. Anlage nach Anspruch 3, dadurch gekennzeichet, dass jeder Gleitschuh seinerseits mit mehreren kleinen Modulen versehen ist, die zueinander mit einer Richtungsunabhängigkeit ausrichtbar sind.

5. Anlage nach Anspruch 2, dadurch gekenntzeichnet, dass die feststehende Struktur (12) des Elements (C) zur Befestigung in der Horizontalen einen Profilkörper (17) aufnimmt, der im Inneren Teleskopelemente (18) aufnimmt, die axial um einen Abstand ausfahren können, der es an seinem Ende ermöglicht, der Innenwand des Kamins/Schachts zugewandt zu sein,
und dass am Ende des letzten Teleskopelements (18a) angelenkt eine Diffusoreinrichtung (19) für ein Fluid oder die Einrichtungen (23) befestigt sind, die in Form einer Vorrichtung mit Greifern ausgeführt sind.

6. Anlage nach Anspruch 5, **dadurch gekennzeichnet, dass** das Trägerprofil (17) der Flüssigkeitsausstoßvorrichtung in Bezug auf die feststehende Verbindungsstruktur (12) ausgehend von einer Schwenkachse (22) angelenkt ist, um eine eingeschränkte Winkelschwenkung zu ermöglichen, um die Lageanhebung der Diffusoreinrichtung (19) zu ermöglichen, um den hochgelegenen oberen Teil des Gebäudes zu erreichen, wobei Verriegelungseinrichtungen die Verbindung zwischen dem Trägerprofil (17) und der feststehenden Struktur (12) sicherstellen.

7. Anlage nach einem der Ansprüche 1 bis 6 in ihrer Anwendung auf ein vertikales Bauwerk der Art eines Kamins oder Schachts, **dadurch gekennzeichnet, dass** die Rahmenkonstruktion (SP) über dem Sattelpunkt angeordnet ist, der die obere Öffnung (1c) des Bauwerks darstellt, das durch mehrere am Boden angeordnete Winden (2) in vertikaler Aufhängung gehalten ist,
und dass der obere Teil (1e) des Gebäudes an seinem Umfang mit einer feststehenden Plattform (3) versehen ist, die Rückstelleinrichtungen (4-5) für jedes der Zugseile (2.1) aufnehmen kann, die mit den Winden (2) verbunden sind, wobei eine Verspannung der Rahmenkonstruktion (SP) geschaffen wird.

8. Anlage nach Anspruch 7, dadurch gekenntzeichnet, dass die Rückstelleinrichtungen (4-5) Rollen sind,
und dass jedes Seil an seinem freien Ende durch einen Haken (24), Karabiner oder entsprechende Einrichtungen an einer Greifvorrichtung (16) in Form eines Rings befestigt ist, der direkt an der Basis der Rahmenkonstruktion (SP) angeformt ist.

## Claims

1. An installation enabling to demolish, depollute, and decontaminate tall constructions of the type comprising, from a portal structure (SP) arranged above the upper aperture of the building, means adjustable in position to bear against the inner wall of the construction and means articulated and steerable to provide a projection of cleaning fluids, wherein the portal structure (SP) is maintained in vertical suspension by a winch (2), wherein the upper portion of the building is fitted on its periphery with a fixed platform (3), wherein the portal structure (SP) comprises a frame (13) on which three types of components (A)(B)(C) are to be arranged, which enable component (A) to receive means for the vertical transitory guidance of a component (B) used to define countersupports for stabilization inside of the building, and a component (C) allowing the projection of a fluid for disintegrating asbestos and other coatings inside of the structure and rotatable over 360°, and wherein component (A) is fitted with a fixed base from which are arranged the means enabling to adjust the position of component (C) and of its fluid projection means, and wherein said base is fitted to receive the support frame (13), means (14) of bearing and stabilization of the portal structure (SP), the support arms receiving at their end bearing means forming a sole plate, **characterized in that** it comprises a plurality of winches (2) arranged on the ground, and **in that** the platform (3) is capable of receiving transmission means (4-5) for each of the winches by creating a guying of the portal structure, and **in that** said frame (13) has a configuration of four single-piece arms (13a)(13b)(13c)(13d) parallel two by two and superposed two by two, the support arms (13a)(13c) and (13b)(13d) receiving telescopic means (15), said telescopic means arranged two by two, in opposition, being configured to be simultaneously controlled to provide the counter-support in a balanced position, and **in that** the component (C) comprises a fixed structure (12) receiving an articulated and steerable profiled body (17) receiving telescopic elements (18) with, at their end, means (19) for diffusing a fluid or means (23) made in the form of a clamping device.

2. The installation of claim 1, **characterized in that** component (A) comprises, from a fixed horizontal base (11), a fixed central vertical body (6) capable of receiving, in its upper portion, means (7) for guiding a vertical connection column (8) according to a vertical adjustment of the component (C), said column (8) being rigidly attached to a fixed structure (12) at component (C), and **in that**, around this frame, from the base (11), are arranged vertical columns (9) receiving jacks (10) having their rods (10a) rigidly attached to the fixed structure (12) of the component (C).

3. The installation of claim 1, **characterized in that** the bearing and stabilization means (14) in the form of sole plates arranged at the end of each telescopic assembly are steerable in position by means for matching the opposite inner shape of the building.

4. The installation of claim 3, **characterized in that** each sole plate is itself fitted with a plurality of small modules steerable in independent directions.

5. The installation of claim 2, **characterized in that** the fixed structure (12) of component (C) fixedly receives in the horizontal direction a profiled body (17) internally receiving telescopic elements (18) which are capable of axially developing, according to a distance enabling its end to be opposite to the inner wall of the chimney,
and **in that**, at the end of the final telescopic element (18a), are attached, in articulated fashion, means (19) for diffusing a fluid or means (23) in the form of a clamping device.

6. The installation of claim 5, **characterized in that** the profile (17) supporting the fluid projection means is articulated with respect to the fixed connection structure (12), from a pivoting axis (22), to allow a limited angular pivoting, to enable to raise in position the pressure means (19) to reach the high upper portion of the building, locking means ensuring the connection between the support profile (17) and the fixed structure (12).

7. The installation of any of claims 1 to 6, as applied to a vertical construction of chimney or well type, **characterized in that** the portal structure (SP) is arranged above the orifice forming the upper aperture (1c) of the construction maintained in vertical suspension by a plurality of winches (2) arranged on the ground,
and **in that** the upper portion (1e) of the building is fitted on its periphery with a fixed platform (3) capable of receiving transmission means (4-5) for each of the traction lines (2.1) associated with the winches (2) by creating a guying of the portal structure (SP).

8. The installation of claim 7, **characterized in that** the transmission means (4-5) are rollers,
and **in that** each line is fixed at its free end by a hook (24), snaps or means equivalent to a ring-shaped grip (16) directly formed on the base of the postal structure (SP).
